# EUROPEAN PATENT APPLICATION

(11) **EP 2 518 846 A2**
(43) Date of publication of application: **31.10.2012**
(21) Application number: 12165765.4
(22) Date of filing: 26.04.2012
(51) Int. Cl.: H02G 3/04, H02G 3/38

(54) **Horizontal cable manager**

(30) Priority: 26.04.2011 US 201161478974 P; 20.04.2012 US 201213451969
(71) Applicant: Fritz, Robert L., Elwood, IL 60421 (US); Newman, David P., Glen Ellyn, IL 60137 (US); Kwasiborski, Steven R., Oak Forest, IL 60452 (US)
(72) Inventor: Fritz, Robert L., Elwood, IL 60421 (US); Newman, David P., Glen Ellyn, IL 60137 (US); Kwasiborski, Steven R., Oak Forest, IL 60452 (US)
(74) Representative: Bollinghaus, Emer

(57) **Abstract**

A horizontal cable manager that is adjustable to accommodate a variety of vertical cable managers.

## Description

### Cross Reference to Related Applications

This application claims priority to U.S. Provisional Patent Application No. 61/478,974, filed on April 26, 2011, which is incorporated by reference in its entirety.

### Background

The present invention relates to a horizontal cable manager. More particularly, it relates to a horizontal cable manager that is adjustable to accommodate a variety of vertical cable managers.

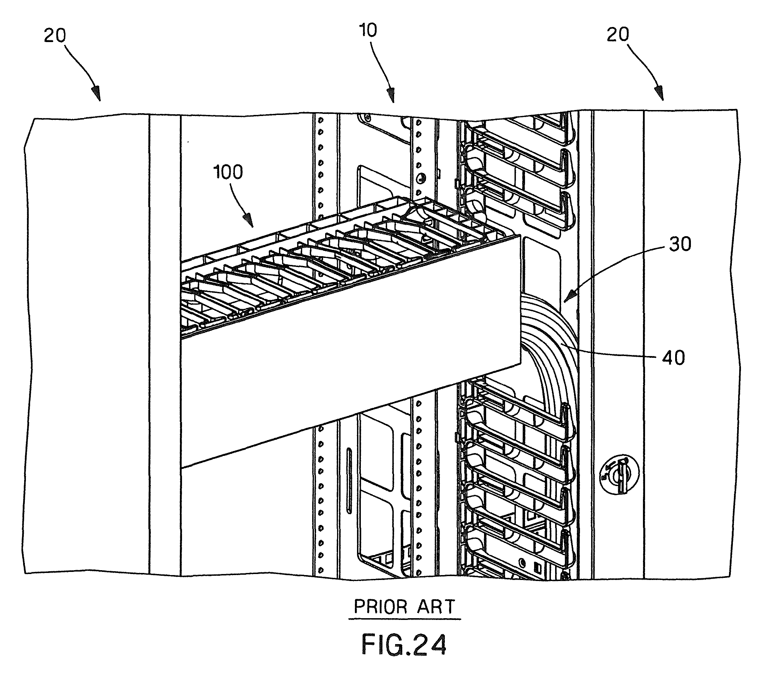

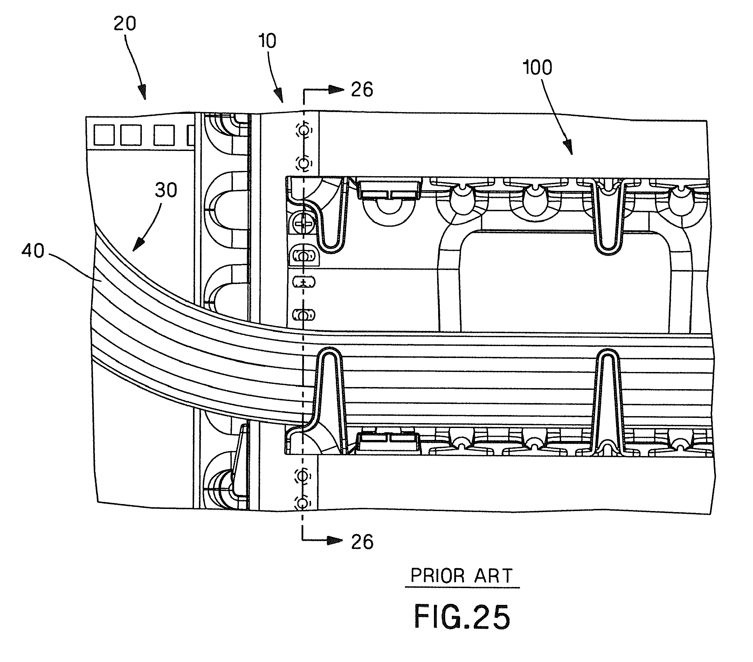

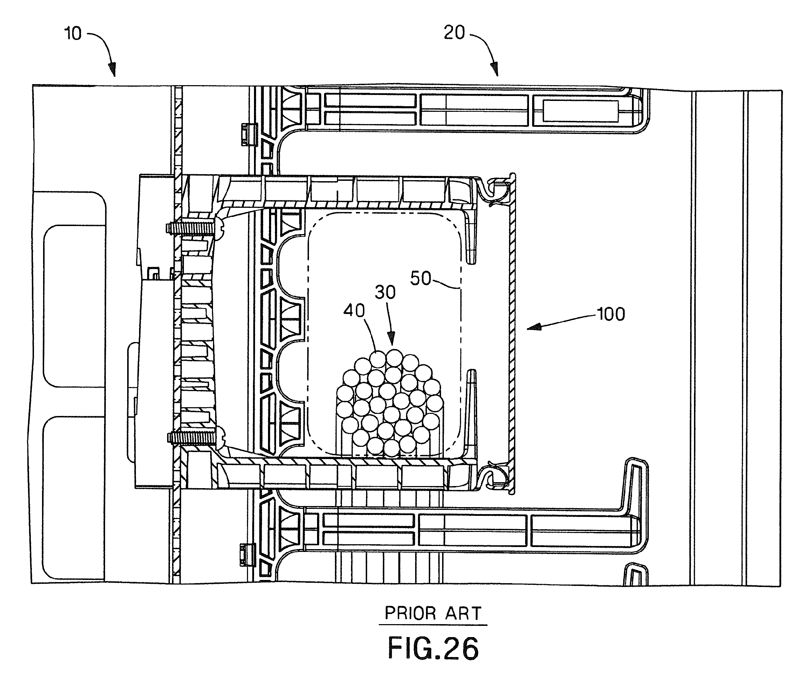

Cable managers are well known in the art. For example, as shown in FIGS. 24-26, a high capacity horizontal cable manager 100, such as Panduit's NetManager^{TM} High Capacity Horizontal Cable Manager (NMF), is mounted to a rack 10, such as Panduit's Standard 6-inch Rack (R2P6S), along with a pair of high capacity vertical cable managers 20, such as Panduit's PatchRunner^{TM} High Capacity Vertical Cable Managers (PEVF). A bundle 30 of cables 40 is routed through the high capacity horizontal cable manager 100 and the high capacity vertical cable managers 20. However, the amount of space 50 available for routing the bundle 30 of cables 40 is limited because the high capacity horizontal cable manager 100 is not aligned with the high capacity vertical cable managers 20.

Therefore, there is a need for a horizontal cable manager that is adjustable to accommodate a variety of vertical cable managers.

### Summary

An invention is set out in the claims.

Certain embodiments provide a horizontal cable manager. The horizontal cable manager includes a carriage. Additionally, the horizontal cable manager includes a pair of finger sections connected to the carriage. Each of the finger sections includes a plurality of fingers. The carriage and the finger sections define a horizontal cable pathway for routing a plurality of cables. Additionally, the horizontal cable manager includes a pair of brackets removably connected to the carriage. Each of the brackets includes a rack-mounting section for mounting the bracket to a rack. The rack-mounting section includes a pair of rack-mounting openings. Each of the rack-mounting openings is for receiving a rack-mounting fastener to secure the rack-mounting section to the rack. Additionally, each of the brackets includes a carriage-mounting section for mounting the carriage to the bracket. The carriage is removably connected to the carriage-mounting section. The carriage-mounting section includes at least one pair of carriage-mounting openings. Each of the carriage-mounting openings is for receiving a carriage-mounting fastener to secure the carriage to the carriage-mounting section. The carriage is positionable at a plurality of locations along the carriage-mounting openings such that the front-to-back position of the horizontal cable manager relative to an adjacent vertical cable manager is adjustable.

### Brief Description of the Drawings

Embodiments will now be described by way of example only in relation to the appended drawings of which:

FIG. 1 is a front perspective view of a horizontal cable manager according to an embodiment, showing the horizontal cable manager mounted to a rack along with a pair of high capacity vertical cable managers;

FIG. 2 is a front perspective view of the horizontal cable manager of FIG. 1, showing the front door and the rear cover removed for clarity;

FIG. 3 is a rear perspective view of the horizontal cable manager of FIG. 1, showing the front door and the rear cover removed for clarity;

FIG. 4 is an exploded view of the horizontal cable manager of FIG. 2;

FIG. 5 is a partial front perspective view of the horizontal cable manager of FIG. 1, showing the front door and rear cover of the horizontal cable manager removed and the front doors of the vertical cable managers open;

FIG. 6 is a front view of the horizontal cable manager of FIG. 5;

FIG. 7 is a cross-sectional view taken along line 7-7 of FIG. 6;

FIG. 8 is an enlarged view of detail 8 of FIG. 7;

FIG. 9 is a cross-sectional view taken along line 9-9 of FIG. 6;

FIG. 10 is a cross-sectional view taken along line 10-10 of FIG. 6;

FIG. 11 is a partial rear perspective view of the horizontal cable manager of FIG. 1;

FIG. 12 is a cross-sectional view taken along line 12-12 of FIG. 11;

FIG. 13 is a partially exploded view of the horizontal cable manager of FIG. 11, showing the rear cover removed from the carriage of the horizontal cable manager;

FIG. 14 is a partial rear perspective view of the horizontal cable manager of FIG. 1, showing a rear cover according to an alternative embodiment;

FIG. 15 is a partial rear perspective view of the horizontal cable manager of FIG. 1, showing a rear cover according to an alternative embodiment;

FIG. 16 is a partial front perspective view of the horizontal cable manager of FIG. 5, showing tabs positioned at distal ends of some of the fingers;

FIG. 17 is a cross-sectional view taken along line 17-17 of FIG. 16;

FIG. 18 is a front perspective view of one of the tabs of FIG. 16;

FIG. 19 is a cross-sectional view taken along line 19-19 of FIG. 17;

FIG. 20 is a partial front perspective view of the horizontal cable manager of FIG. 5, showing tabs positioned in the middle of some of the fingers;

FIG. 21 is a cross-sectional view taken along line 21-21 of FIG. 20;

FIG. 22 is a partial front perspective view of the horizontal cable manager of FIG. 1, showing the horizontal cable manager mounted to a rack along with a pair of vertical cable managers, which have less capacity that the high capacity vertical cable managers of FIG. 1;

FIG. 23 is a cross-sectional view taken along line 23-23 of FIG. 22;

FIG. 24 is a partial front perspective view of a high capacity horizontal cable manager according to the prior art, showing the high capacity horizontal cable manager mounted to a rack along with a pair of high capacity vertical cable managers;

FIG. 25 is a partial front view of the horizontal cable manager of FIG. 24, showing the front door removed from the horizontal cable manager; and

FIG. 26 is a cross-sectional view taken along line 26-26 of FIG. 25.

### Detailed Description

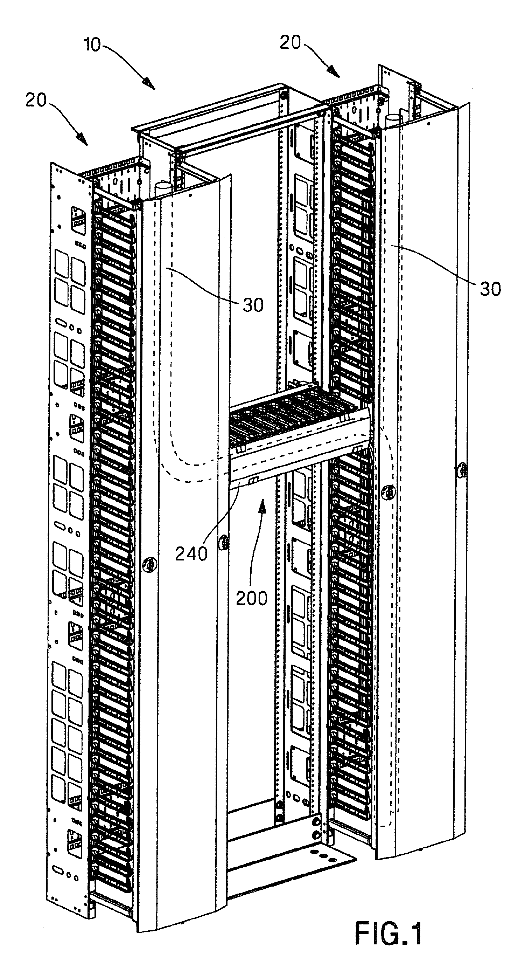

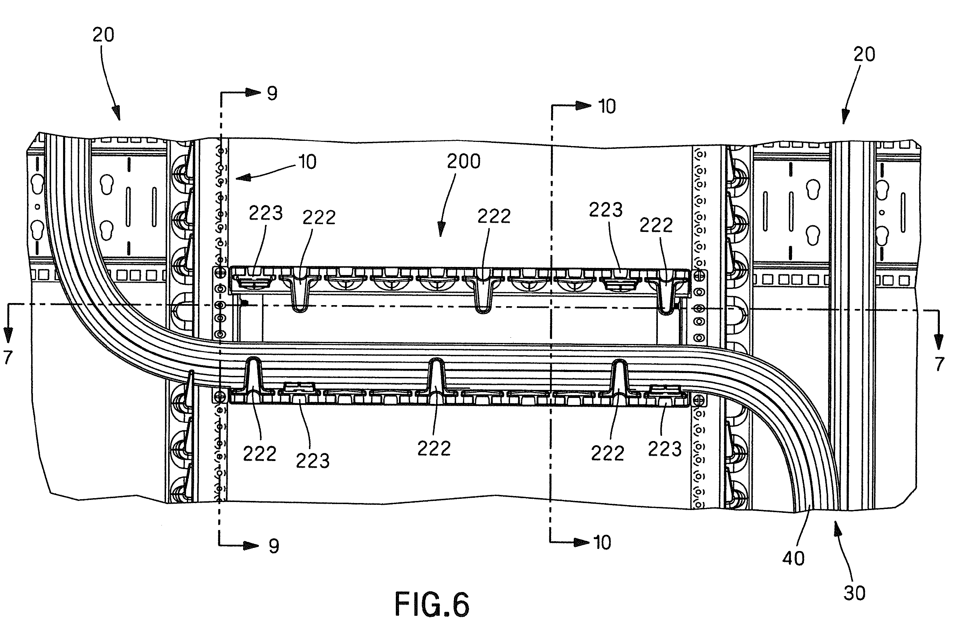

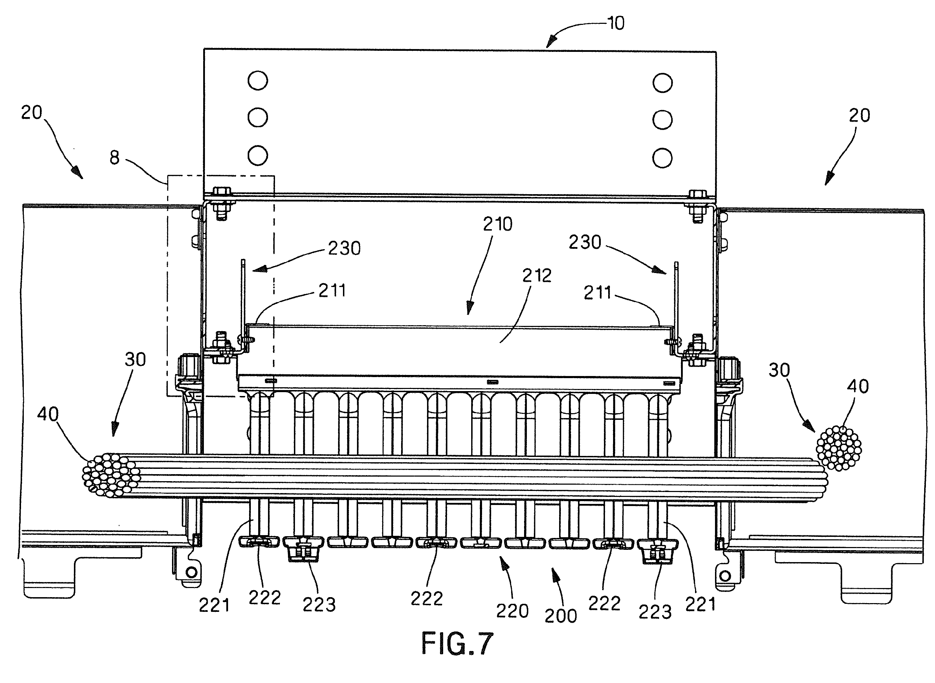

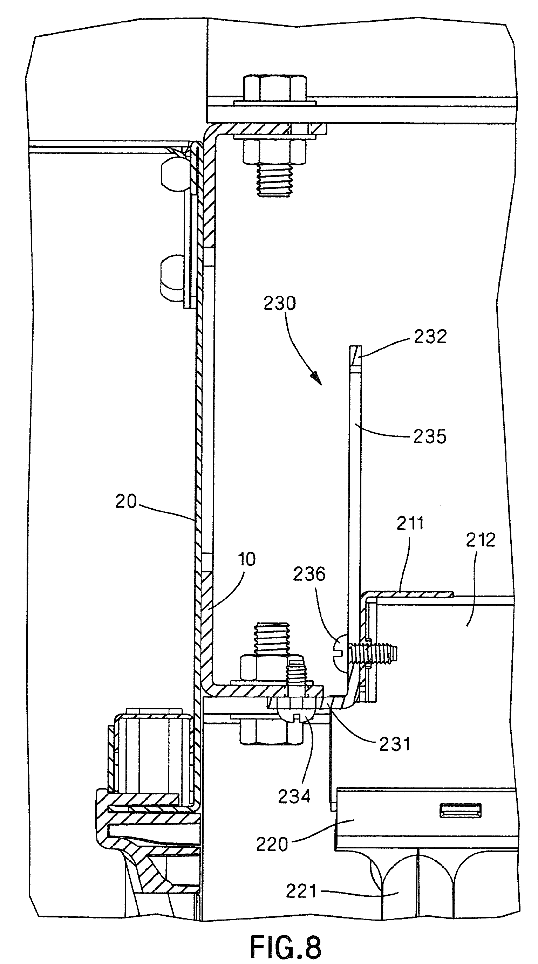

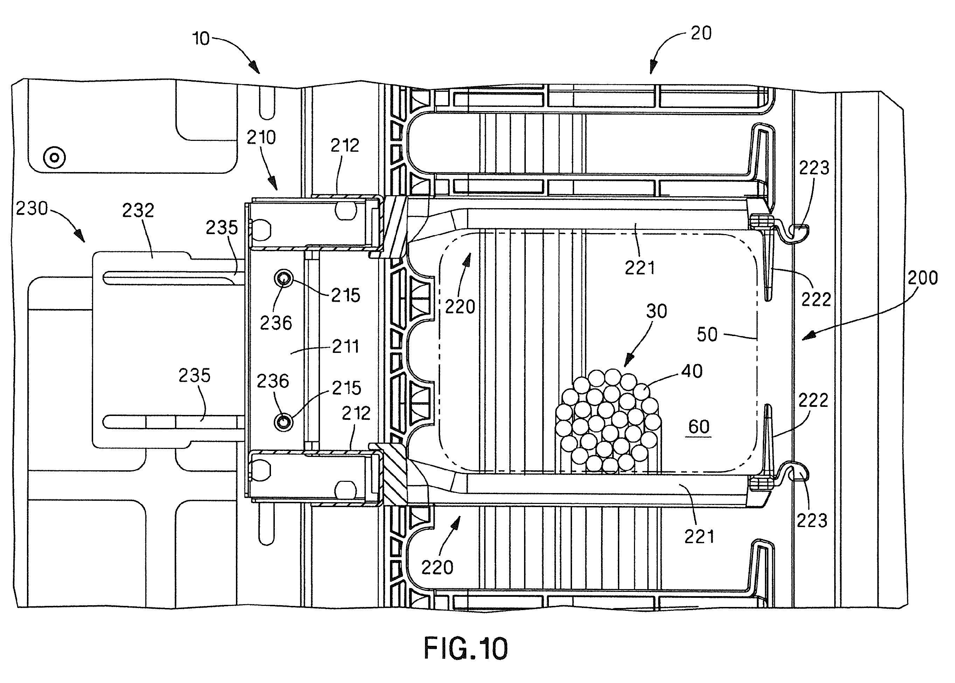

As shown in FIG. 1 and 5-21, a horizontal cable manager 200 is mounted to a rack 10, such as Panduit's Standard 6-inch Rack (R2P6S), along with a pair of high capacity vertical cable managers 20, such as Panduit's PatchRunner^{TM} High Capacity Vertical Cable Managers (PEVF). A bundle 30 of cables 40 is routed through the horizontal cable manager 200 and the high capacity vertical cable managers 20.

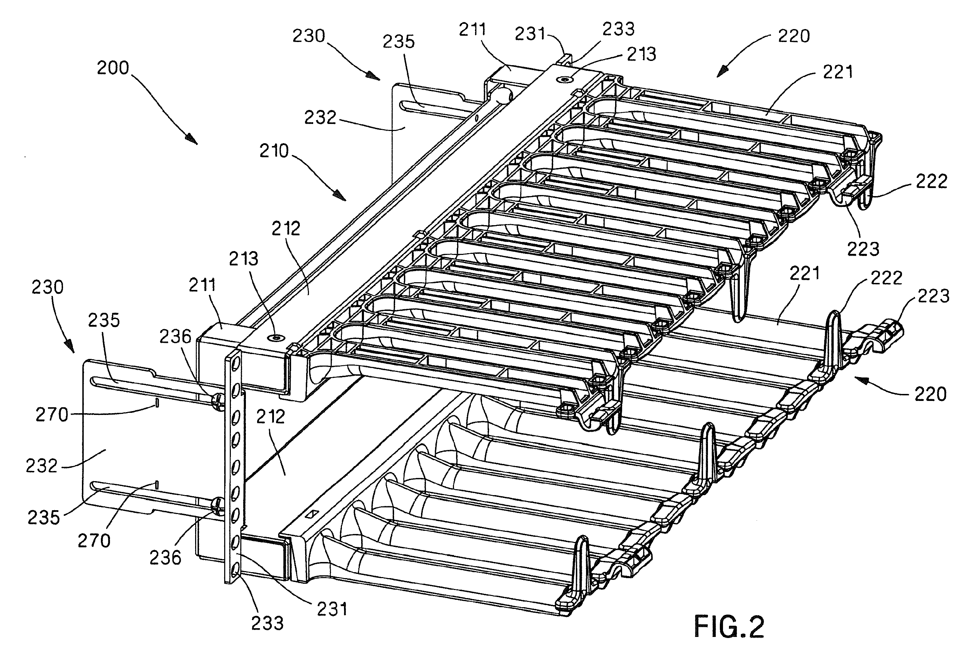

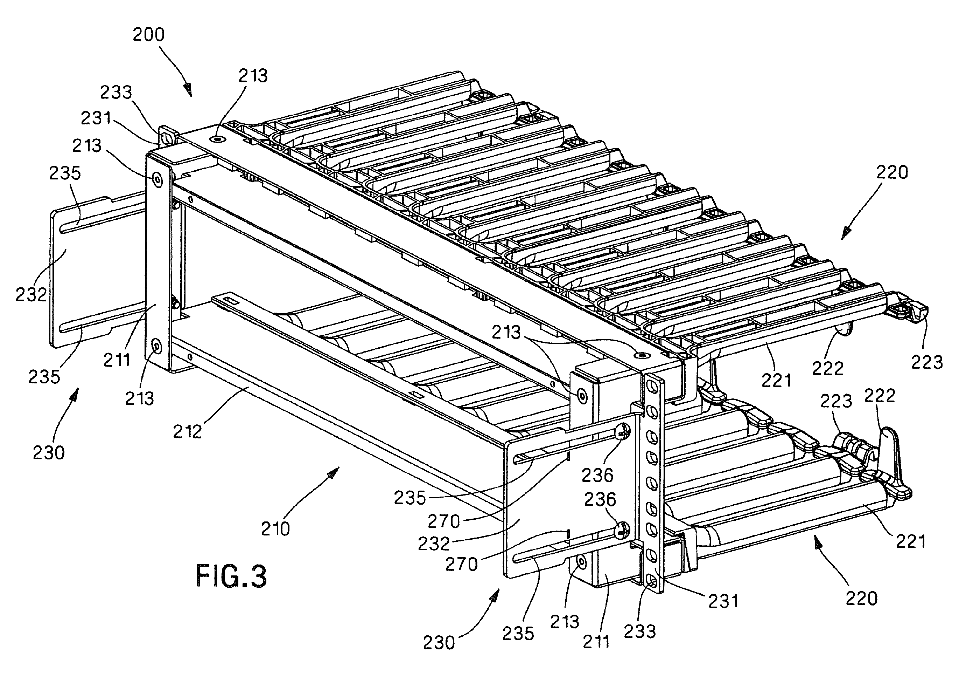

As shown in FIGS. 2-4, the horizontal cable manager 200 includes a carriage 210. The carriage 210 includes a pair of side support members 211 and a pair of finger-mounting brackets 212, which are assembled, for example, using rivets 213, to form the carriage 210. Alternatively, the carriage 210 may be a single component. Preferably, the carriage 210, or at least a portion thereof, blocks airflow through the horizontal cable manager 200, for example, to separate cold air in the front of the rack 10 and hot air in the back of the rack 10.

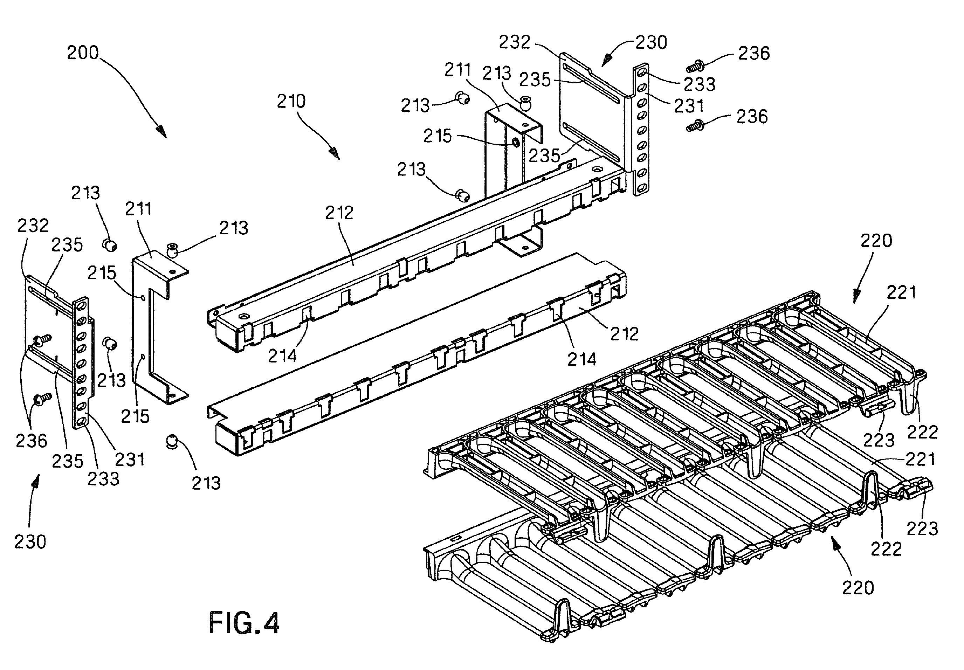

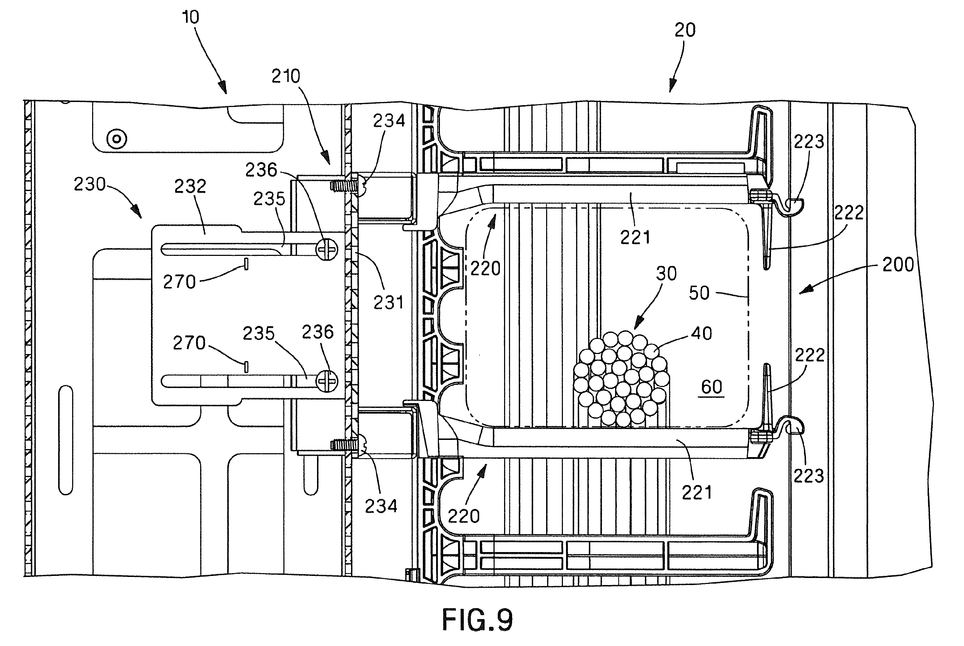

Additionally, the horizontal cable manager 200 includes a pair of finger sections 220, each of which is removably connected to the carriage 210. For example, as shown in FIG. 4, a top finger section 220 snap-fits into openings 214 in a top finger-mounting bracket 212 and a bottom finger section 220 snap-fits into openings 214 in a bottom finger-mounting bracket 212. Together, the carriage 210 and the finger sections 220 form a channel 60 for routing the bundle 30 of cables 40 (FIG. 9).

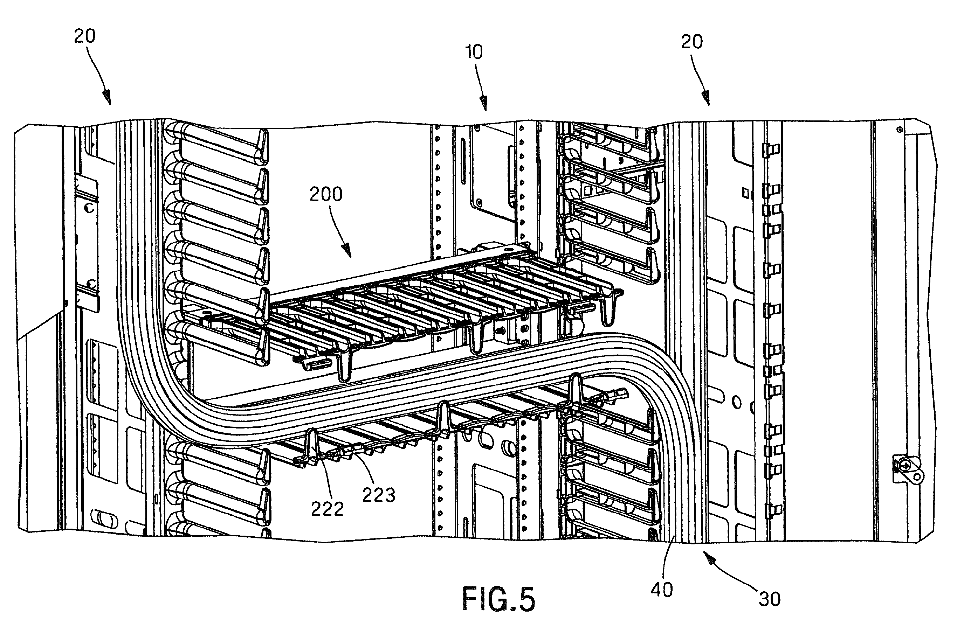

Each of the finger sections 220 includes a plurality of fingers 221. Some of the fingers 221 include a tab 222 for retaining the bundle 30 of cables 40 in the horizontal cable manager 200, while still providing a sufficient amount of access to the horizontal cable manager 200 (FIGS. 5-7 and 9).

Additionally, the horizontal cable manager 200 includes a pair of rack-mounting brackets 230 for mounting the carriage 210 to the rack 10. Each of the brackets 230 includes a rack-mounting section 231 for mounting the bracket 230 to the rack 10 and a carriage-mounting section 232 for mounting the bracket 230 to the carriage 210. The rack-mounting section 231 includes a plurality of openings 233, such as holes, each for receiving a fastener 234, such as a screw, to secure the bracket 230 to the rack 10 (FIGS. 4, 8, and 9). The carriage-mounting section 232 includes a pair of elongated openings 235, such as slots, preferably extending the length of the carriage-mounting section 232, each for receiving a fastener 236, such as a screw, to secure the bracket 230 to the carriage 210, for example, via a pair of openings 215 in each of the side support members 211 of the carriage 210 (FIGS. 4, 8, and 9). Alternatively, the elongated openings 235 may be replaced with a plurality of smaller openings, each corresponding to a different vertical cable manager.

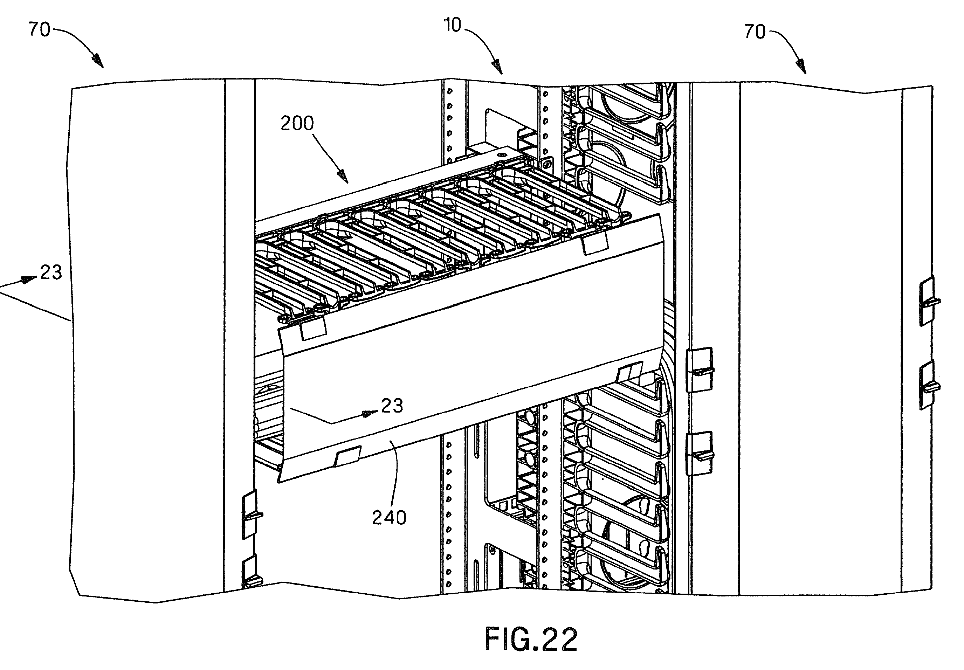

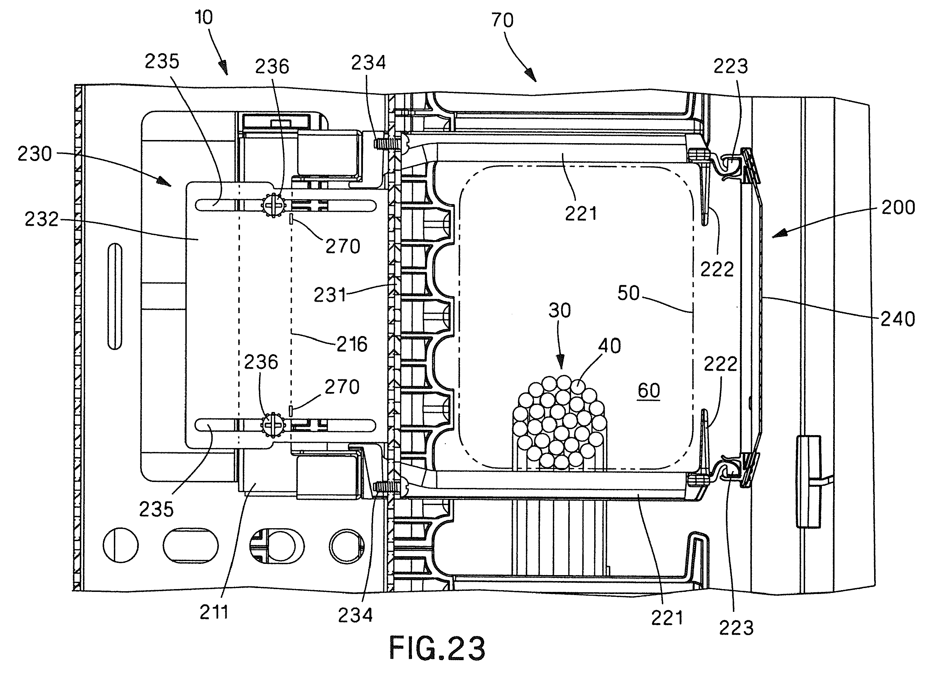

The horizontal cable manager 200 is adjustable from a retracted position (not shown) to a fully extended position (FIGS. 1-21) or a partially extended position (FIGS. 22-23) to accommodate a variety of vertical cable managers. For example, as shown in FIG. 9, the horizontal cable manager 200 is in a fully extended position, maximizing the amount of space 50 available for routing the bundle 30 of cables 40 with respect to the adjacent high capacity vertical cable managers 20. Alternatively, as shown in FIG. 23, the horizontal cable manager 200 is in a partially extended position, maximizing the amount of space 50 available for routing the bundle 30 of cables 40 with respect to adjacent vertical cable managers 70, such as Panduit's PatchRunner^{TM} Vertical Cable Managers (PRV), which have less capacity than the high capacity vertical cable managers 20.

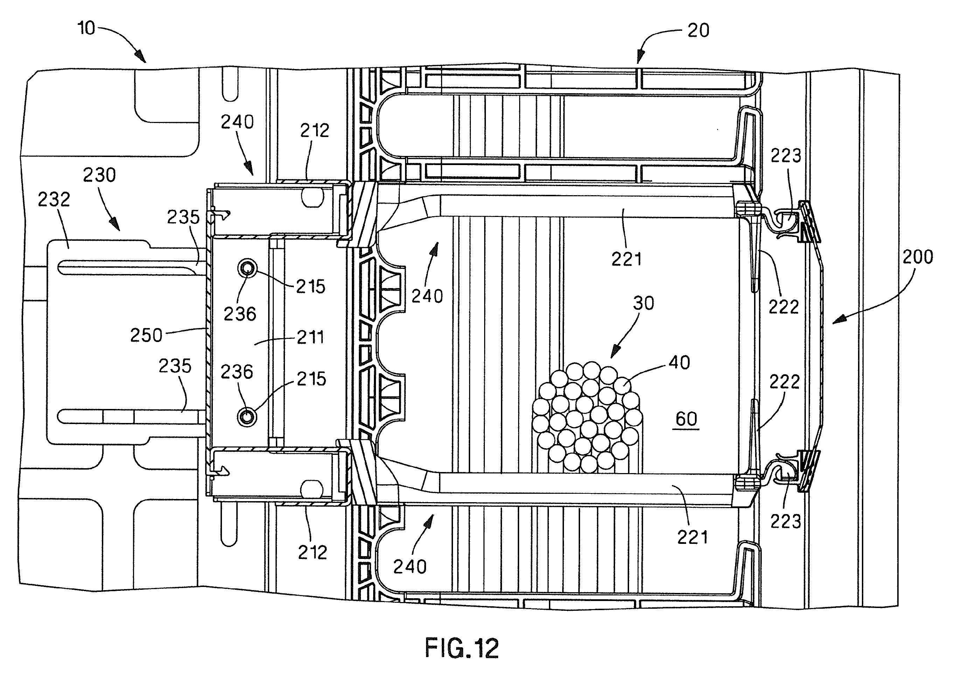

As shown in FIGS. 1 and 12, the horizontal cable manager 200 includes a front door 240, which is removably and rotatably connected to the horizontal cable manager 200, and more particularly, hinge knuckles 223 disposed at distal ends of some of the fingers 221 of the finger sections 220 (FIG. 4).

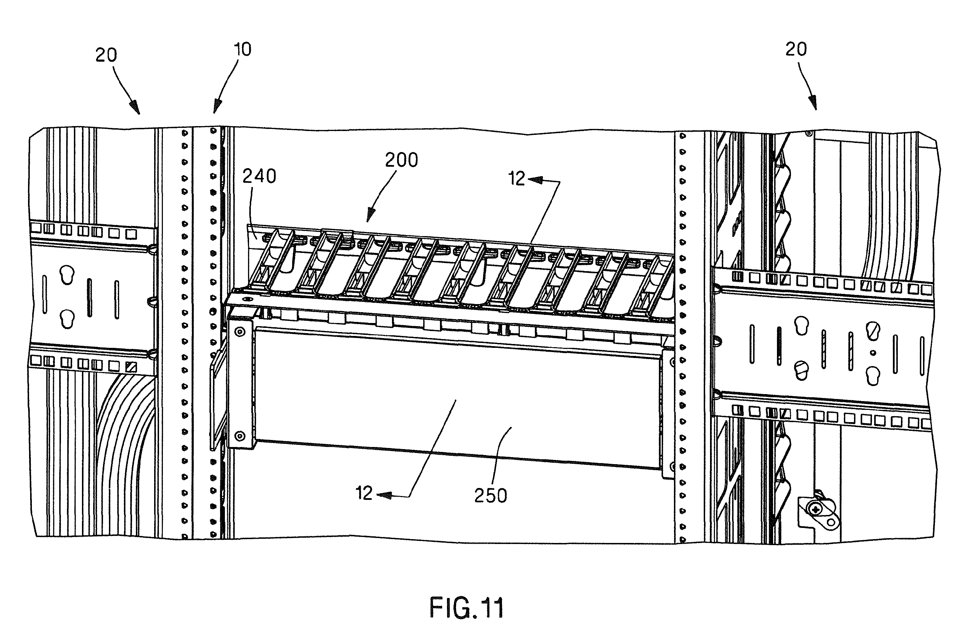

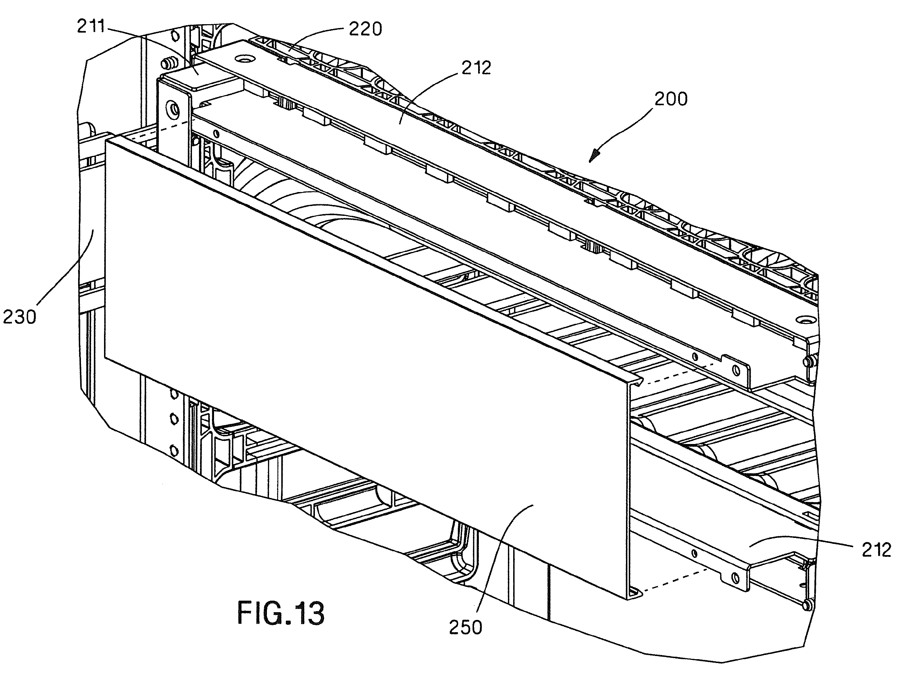

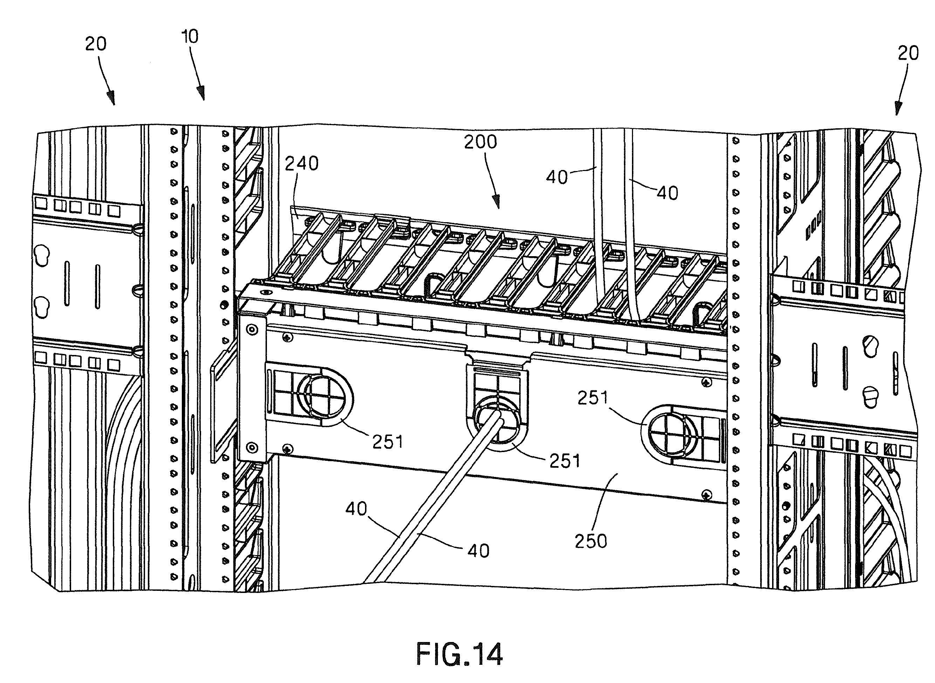

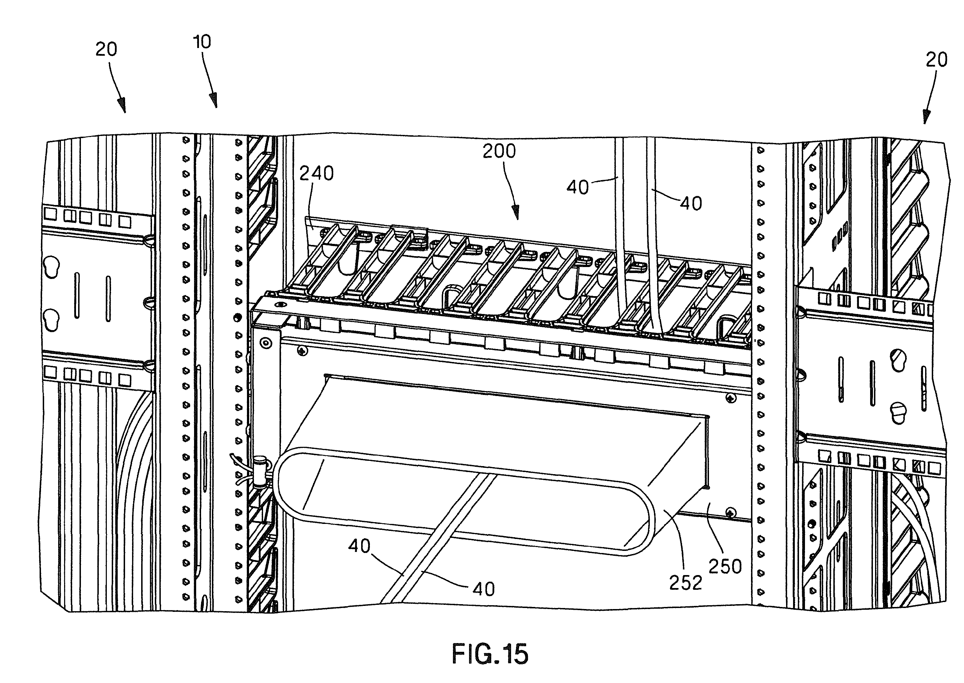

As shown in FIGS. 11-15, the horizontal cable manager 200 includes a rear cover 250, which is removably connected to the horizontal cable manager 200, and more particularly, the carriage 210. For example, as shown in FIG. 13, the rear cover 250 is snap-fit to the carriage 210. Alternatively, as shown in FIGS. 14 and 15, the rear cover 250 is fastened to the carriage 210. In certain embodiments, the rear cover 250 includes grommets 251 (FIG. 14) or a sleeve 252 (FIG. 15), such as Panduit's Cool Boot^{®} Sleeve (CTG). As shown in FIGS. 14 and 15, cables 40 are routed between the fingers 221 and also through the grommets 251 and sleeve 252. Preferably, the rear cover 250 blocks airflow through the horizontal cable manager 200, for example, to separate cold air in the front of the rack 10 and hot air in the back of the rack 10. As shown in FIG. 15, the sleeve 252 is open, but it is likewise contemplated that the sleeve 252 is closed, for example, cinched around cables 40, to further block airflow through the horizontal cable manager 200.

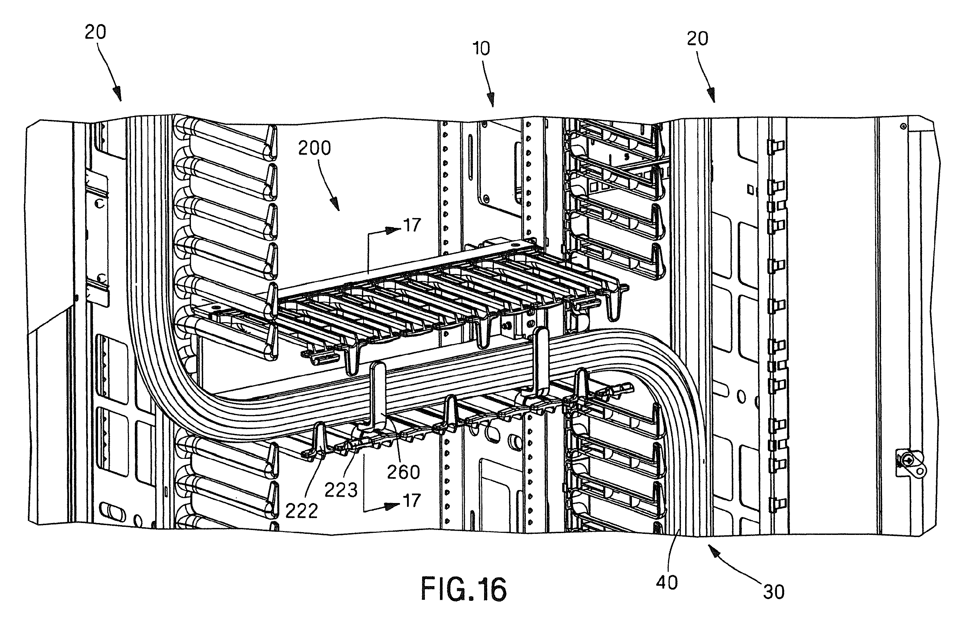

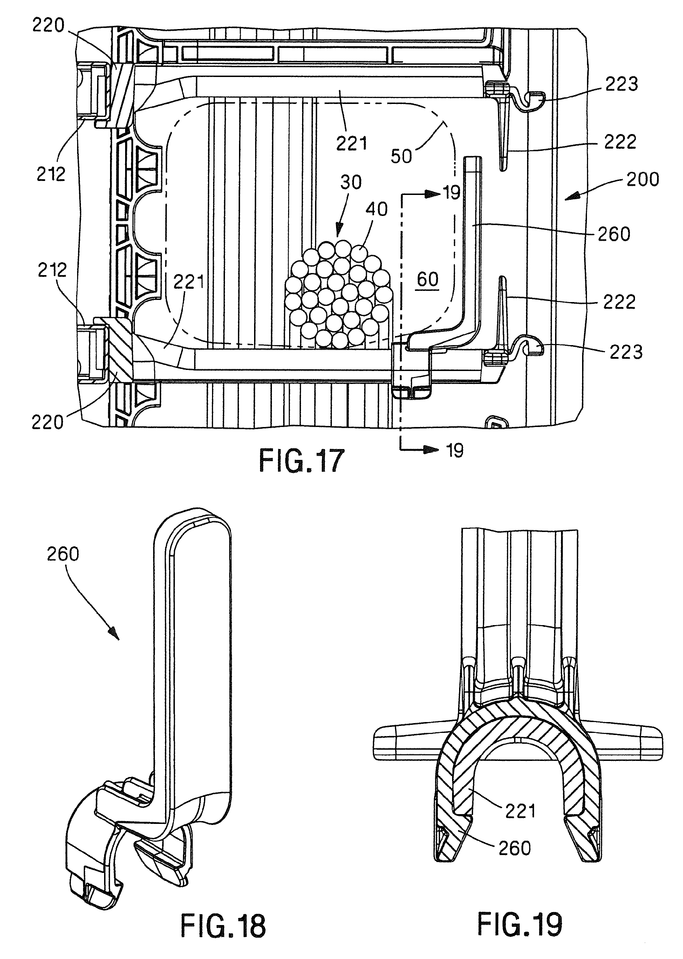

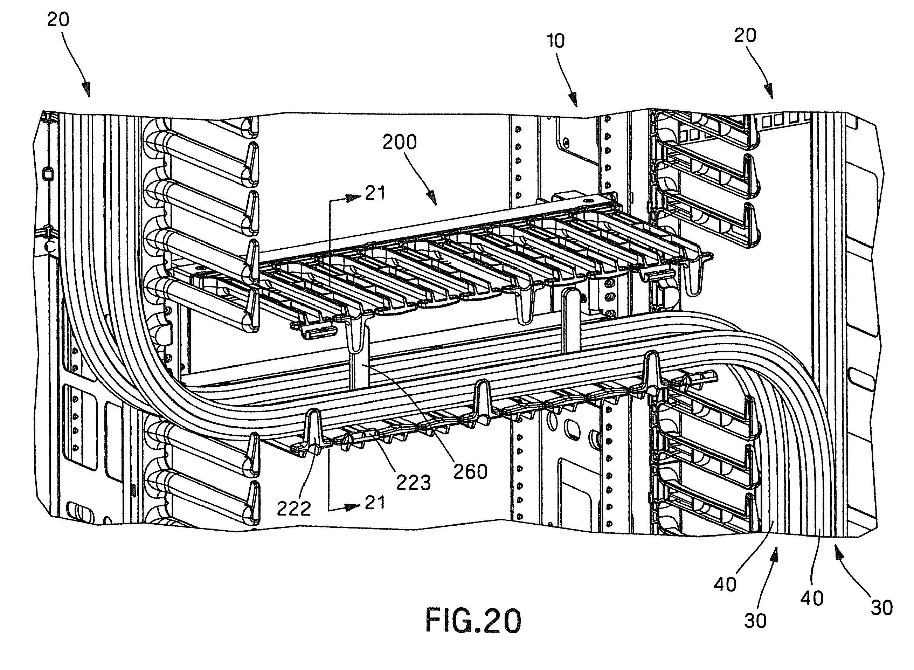

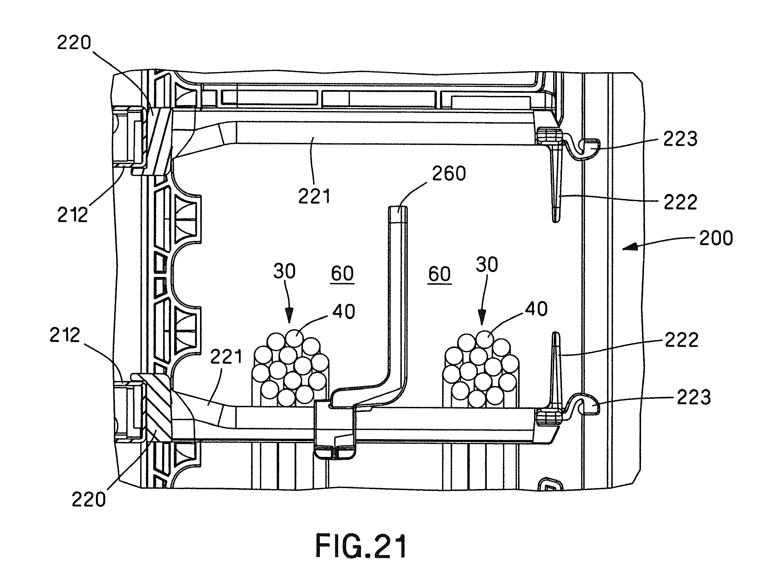

As shown in FIGS. 16-21, the horizontal cable manager 200 includes retainers 260, which are removably connected to and positioned at a variety of locations along the fingers 221. For example, as shown in FIG. 16 and 17, the retainers 260 are positioned at distal ends of some of the fingers 221 to retain the bundle 30 of cables 40 in the horizontal cable manager 200. Alternatively, as shown in FIG. 20 and 21, the retainers 260 are positioned in the middle of some of the fingers 221 to divide the horizontal cable manager 200 into a plurality of channels 60. Preferably, the retainers 260 are longer than the tabs 222 to prevent smaller bundles of cables from exiting through a front portion of the horizontal cable manager 200, but it is likewise contemplated that the retainers 260 are shorter than or equal in length to the tabs 222. More preferably, the retainers 260 extend beyond a midpoint of the front portion of the horizontal cable manager 200.

In certain embodiments, the horizontal cable manager 200 includes indicia 270 for properly aligning the horizontal cable manager 200 with adjacent vertical cable managers. For example, as shown in FIG. 23, the carriage-mounting section 232 of the bracket 230 includes indicia 270, which are aligned with front edges 216 of the side support members 211, for properly aligning the horizontal cable manager 200 with the adjacent vertical cable managers 70.

While a horizontal cable manager has been described in conjunction with the exemplary embodiments outlined above, various alternatives, modifications, variations, and/or improvements, whether known or presently unforeseen, may become apparent. Accordingly, the exemplary embodiments as set forth above are intended to be illustrative, not limiting. Various changes may be made without departing from the spirit and scope of the invention.

## Claims

1. A horizontal cable manager comprising:
a carriage;
a pair of finger sections connected to the carriage, each of the finger sections having a plurality of fingers,
wherein the carriage and the finger sections define a horizontal cable pathway for routing a plurality of cables; and
a pair of brackets removably connected to the carriage, each of the brackets comprising:
a rack-mounting section for mounting the bracket to a rack, the rack-mounting section having a pair of rack-mounting openings, each of the rack-mounting openings for receiving a rack-mounting fastener to secure the rack-mounting section to the rack; and
a carriage-mounting section for mounting the carriage to the bracket, the carriage removably connected to the carriage-mounting section, the carriage-mounting section having at least one pair of carriage-mounting openings, each of the carriage-mounting openings for receiving a carriage-mounting fastener to secure the carriage to the carriage-mounting section, the carriage positionable at a plurality of locations along the carriage-mounting openings such that the front-to-back position of the horizontal cable manager relative to an adjacent vertical cable manager is adjustable.

2. The horizontal cable manager of claim 1, wherein the carriage includes a pair of side support members.

3. The horizontal cable manager of claim 2, wherein each of the brackets is removably connected to one of the side support members.

4. The horizontal cable manager of claim 1, wherein the carriage includes a pair of finger-mounting brackets, and preferably wherein each of the finger sections is removably connected to one of the finger-mounting brackets.

5. The horizontal cable manager of claim 1, wherein each of the finger sections includes a tab extending from a distal end of one of the fingers, and preferably wherein the tab is perpendicular to the finger and extends from one finger section toward the other finger section.

6. The horizontal cable manager of claim 1, wherein each of the finger sections includes a hinge knuckle extending from a distal end of one of the fingers.

7. The horizontal cable manager of claim 1, wherein the carriage-mounting section is perpendicular to the rack-mounting section.

8. The horizontal cable manager of claim 1, wherein the at least one pair of carriage-mounting openings includes at least one pair of elongated carriage-mounting openings, or wherein the at least one pair of carriage-mounting openings includes a plurality of pairs of carriage-mounting openings, the carriage positionable at each of the plurality of pairs of carriage-mounting openings.

9. The horizontal cable manager of claim 1, further comprising a front door removably and rotatably connected to each of the finger sections.

10. The horizontal cable manager of claim 1, further comprising a rear cover removably connected to the carriage.

11. The horizontal cable manager of claim 10, wherein the rear cover includes an opening for routing at least one of the cables.

12. The horizontal cable manager of claim 11, wherein the rear cover includes a grommet for sealing a portion of the opening surrounding the at least one cable, or wherein the rear cover includes a sleeve for sealing a portion of the opening surrounding the at least one cable.

13. The horizontal cable manager of claim 1, further comprising a retainer removably connected to one of the fingers.

14. The horizontal cable manager of claim 13 wherein the retainer is positioned at a distal end of the finger, or wherein the retainer is positioned between the carriage and a distal end of the finger.

15. The horizontal cable manager of claim 1, wherein at least one of the carriage and the brackets includes indicia for aligning the horizontal cable manager with the adjacent vertical cable manager.
